# EUROPEAN PATENT APPLICATION

(11) **EP 4 375 388 A1**
(43) Date of publication of application: **29.05.2024**
(21) Application number: 22845659.6
(22) Date of filing: 30.03.2022
(51) Int. Cl.: C22C 9/00, C21D 1/10, B33Y 10/00, B33Y 30/00, H05B 6/36, B22F 10/18, B22F 10/28

(54) **HEATING COIL FOR HIGH-FREQUENCY HEATER**

(30) Priority: 21.07.2021 JP 2021120990
(71) Applicant: TKE Co., Ltd., Yatomi-shi, Aichi 498-0066 (JP)
(72) Inventor: ITO, Hideaki, Yatomi-shi, Aichi 490-1402 (JP); ABE, Kazuhiro, Yatomi-shi, Aichi 490-1402 (JP)
(74) Representative: Plasseraud IP
(86) International application number: PCT/JP2022/016282
(87) International publication number: WO 2023/002720

(57) **Abstract**

Provided is a heating coil for a high-frequency heater that is excellent in cooling efficiency, allowed to be continuously used for a long period of time without a damage even under a high output condition, and allowed to be manufactured in the same characteristics with good reproducibility in the manufacture.

Solution

A heating coil 1 is integrally formed by a modeling method repeating laying, melting, solidifying, and laminating of a powder containing a conductive material based on three-dimensional data. The heating coil 1 includes a pair of plate-shaped grounding portions 2a, 2b for contact with an electrode that generates a high-frequency current, a pair of plate-shaped supporting portions 3a, 3b disposed to be perpendicular to the grounding portions 2a, 2b, respectively, and an annular heating unit 4 disposed to connect distal ends of the supporting portions 3a, 3b to one another. Sequences of cooling medium flow-down paths 6a, 6b for flowing down a cooling medium are formed inside the grounding portions 2a, 2b, the supporting portions 3a, 3b, and the heating unit 4, respectively.

## Description

### TECHNICAL FIELD

The present invention relates to a heating coil used for a high-frequency heater configured to heat a material to be worked using electromagnetic induction by a high-frequency current.

### BACKGROUND ART

For increasing hardness of a portion close to a surface of a metal material to be worked (workpiece), processing (what is called, hardening process) in which the surface of the material to be worked is heated to a temperature equal to or more than a transformation point (austenite transformation point) of the metal, and then rapidly cooled is performed. As a method for performing the hardening process, a method in which a material to be worked is heated by bringing a metal member (heating coil) to which a high-frequency current has been flowed close to a surface of the material to be worked using a high-frequency heater is widely employed.

A conventional heating coil includes a pair of grounding portions configured to ground a high-frequency power source, an annular coil portion externally fitted to a material to be worked, and a pair of coupling portions for coupling the grounding portions and the coil portion. Additionally, to suppress heat generation when the high-frequency current is flowed, the conventional heating coil is provided with a coolant passage to flow down a cooling medium, such as water, to the coil portion. For example, Patent Document 1 discloses a heating coil in which a coolant passage is formed inside a coil portion by laminating a coil plate with a depressed groove engraved to an inner surface.

Furthermore, in common heating coils, to avoid occurrence of dielectric breakdown between a pair of grounding portions and between a pair of coupling portions disposed side by side when the output of the high-frequency power source is increased, an insulating plate made of a synthetic resin is interposed between the pair of grounding portions and between the pair of coupling portions (Patent Document 2).

Patent Document 1: Japanese Patent No. 4358292
Patent Document 2: Japanese Unexamined Patent Application Publication No. 2020-115428

### DISCLOSURE OF THE INVENTION

### PROBLEMS TO BE SOLVED BY THE INVENTION

However, since the conventional heating coil for a high-frequency heater needs to be formed by bonding a plurality of components with silver solder or the like to provide the hollow coolant passage to the coil portion, the continuous use under the high output condition (processing condition of applying a high-frequency power supply at a high voltage) easily causes a situation that a damage occurs and the cooling medium leaks. Additionally, the conventional heating coil for a high-frequency heater is poor in cooling efficiency because a cooling mechanism is disposed at only the coil portion, and has a malfunction that by the continuous use under the high output condition, the insulating plate is carbonized and deteriorated due to the grounding portion and the coupling portion held at high temperature, and this causes dielectric breakdown by creeping discharge.

Furthermore, since the above-described conventional heating coil needs to be formed by brazing a plurality of components, it is difficult to manufacture the products having the same characteristics with good reproducibility in the manufacture, and this causes a malfunction that variation occurs in the quality of the material to be worked to be heated.

It is an object of the present invention to solve the above-described problems of the conventional heating coils for a high-frequency heater, and provide a heating coil for a high-frequency heater that is excellent in cooling efficiency, allowed to be continuously used for a long period of time without a damage even under a high output condition, and allowed to be manufactured in the same characteristics with good reproducibility in the manufacture.

### SOLUTIONS TO THE PROBLEMS

In the present invention, an invention described in claim 1 is a heating coil used for a high-frequency heater configured to heat a material to be worked using electromagnetic induction by a high-frequency current. The heating coil is integrally formed by a modeling method repeating laying, melting, solidifying, and laminating of a powder containing a conductive material based on three-dimensional data (hereinafter referred to as a partial welding lamination method of conductive material powder layer), or a modeling method laminating a melted conductive material based on three-dimensional data (hereinafter referred to as a melt extrusion lamination method of conductive material). The heating coil includes a pair of plate-shaped grounding portions for contact with an electrode through which a high-frequency current is flowed, a pair of plate-shaped supporting portions disposed to be perpendicular to the respective grounding portions, and an annular heating unit disposed to connect distal ends of the supporting portions to one another. A sequence of a cooling medium flow-down path for flowing down a cooling medium is formed inside each of the grounding portions, each of the supporting portions, and the heating unit.

In an invention described in claim 2, which is in the invention described in claim 1, the grounding portion is provided with an injection port for injecting the cooling medium into the cooling medium flow-down path and/or a discharge port for discharging the cooling medium from the cooling medium flow-down path.

In an invention described in claim 3, which is in the invention described in claim 1, the heating unit is provided with an injection port for injecting the cooling medium into the cooling medium flow-down path and/or a discharge port for discharging the cooling medium from the cooling medium flow-down path.

### EFFECTS OF THE INVENTION

The heating coil for a high-frequency heater (hereinafter simply referred to as a heating coil) according to claim 1 is provided with the sequence of the cooling medium flow-down path for flowing down the cooling medium not only inside the annular heating unit but also inside each of the grounding portions and each of the supporting portions. Therefore, since not only the heating unit but also the grounding portion and the supporting portion are simultaneously cooled during the heating process of the material to be worked, a portion kept at high temperature over a long period of time is not generated. Therefore, since the situation, such as a dielectric breakdown caused by carbonization and/or deterioration of the insulating plate and a damage due to stress concentration to a specific part, is less likely to occur, the heating coil according to claim 1 is excellent in durability, and can undergo the repeated heating process on the material to be worked over a long period of time even under the high output condition.

Since the heating coil according to claim 1 is formed by the partial welding lamination method of conductive material powder layer or the melt extrusion lamination method of conductive material based on three-dimensional data, a bonding portion by silver solder as a conventional heating coil is not included. Therefore, the deformation does not occur even when the temperature rises due to the continuous use, and the standard heating process (hardening process) can be performed over a long period of time. Furthermore, since the heating coil according to claim 1 is formed by the partial welding lamination method of conductive material powder layer or the melt extrusion lamination method of conductive material based on three-dimensional data, the product having the same shape and the same characteristics can be efficiently manufactured with good reproducibility without depending on the skill of the manufacturing worker.

In addition, since the heating coil according to claim 1 is integrally formed without brazing by the partial welding lamination method of conductive material powder layer or the melt extrusion lamination method of conductive material based on three-dimensional data, the sequences of the cooling medium flow-down paths are formed inside the heating unit, the respective grounding portions, and the respective supporting portions. Therefore, the need for providing a plurality of cooling medium supply mechanisms is eliminated, and the loss of cooling medium (that is, a situation in which the cooling medium is discharged without large contribution to the heat exchange) can be reduced.

The heating coil according to claim 2 includes the injection port for injecting the cooling medium into the cooling medium flow-down path and the discharge port for discharging the cooling medium from the cooling medium flow-down path at the grounding portion. Therefore, the mounting portion of the heating coil in the high-frequency heater can be compactly designed with a small space, and the installation to and removal from the high-frequency heater main body can be facilitated.

The heating coil according to claim 3 includes the injection port for injecting the cooling medium into the cooling medium flow-down path and the discharge port for discharging the cooling medium from the cooling medium flow-down path at the heating unit, and the heating unit likely to become the highest temperature can be supplied with the cooling medium at low temperature immediately after introduction from the water source. Therefore, the heating coil according to claim 3 is extremely excellent in cooling efficiency, and can be used in a state of being applied with a high-frequency power supply at a considerably high output.

### BRIEF DESCRIPTION OF THE DRAWINGS

Fig. 1 is a front view of a heating coil.
Fig. 2 is a back view of the heating coil.
Fig. 3 is a left side view of the heating coil.
Fig. 4 is a plan view of the heating coil (perspective plan view of a cooling medium flow-down path inside).
Fig. 5 is a perspective view of the heating coil.
Fig. 6 is a cross-sectional view of grounding portions of the heating coil (end view of line A-A of Fig. 4).
Fig. 7 is a cross-sectional view of a supporting portion of the heating coil (end view of line B-B of Fig. 4).
Fig. 8 is an explanatory view illustrating a state of manufacturing the heating coil (Fig. 8Ais a plan view, and Fig. 8B is a vertical cross-sectional view).
Fig. 9 is an explanatory view illustrating a modification of the heating coil.

### DESCRIPTION OF PREFERRED EMBODIMENTS

A heating coil according to the present invention requires to be integrally formed by a modeling method based on three-dimensional data using a three-dimensional printer. As the modeling method, a modeling method repeating laying, melting, solidifying, and laminating of a powder containing a conductive material based on three-dimensional data (partial welding lamination method of conductive material powder layer), or a modeling method laminating a melted conductive material based on three-dimensional data (melt extrusion lamination method of conductive material) can be employed. The use of the partial welding lamination method of conductive material powder layer as the heating coil modeling method is preferable because a heating coil having complicated shape and structure can be easily manufactured.

The conductive material used as a raw material of modeling in the present invention means a material that substantially does not have a magnetic property and has satisfactory conductivity. Examples of the conductive material can include copper, brass, and argentum. Among these conductive materials, use of copper is preferable because the cost, such as a material cost, can be reduced to ensure easily manufacturing the heating coil at low price by a three-dimensional printer, and further, the extremely satisfactory conductivity is provided to improve a heat generation efficiency by electromagnetic induction.

When copper is used as the conductive material, while pure copper can be used, use of an alloy (high copper alloy) in which iron, tin, nickel, titanium, beryllium, zirconium, chrome, silicon, or the like is contained in copper with a lower proportion than copper is preferable because laser absorption is increased to allow accelerating temperature rise. Furthermore, among those copper alloys, use of a copper-chrome alloy in which chrome is contained in copper is more preferable because the strength of the heating coil can be effectively enhanced while the production efficiency with the three-dimensional printer is maintained to be high. Use of an alloy (C18150, that is, one containing 98.71 to 99.45 mass% of copper, 0.50 to 1.00 mass% of chrome, and 0.05 to 0.25 mass% of zirconium) containing chrome and zirconium in copper with predetermined proportions is especially preferable.

When the partial welding lamination method of conductive material powder layer is used to model the heating coil according to the present invention, the laid raw material of modeling (that is, the powder containing the conductive material) needs to be melted by irradiation with a laser or electron beam. As the laser at that time, while a semiconductor laser, a carbon dioxide laser, an excimer laser, a YAG laser, a fiber laser, or the like can be appropriately used, use of the fiber laser (that is, a laser that uses an optical fiber in which a rare earth element, such as Yb, is added as a laser medium) is preferable because a laser light without deviation of optical axis can be obtained at a high output by a small-sized device, and a heating coil with high dimensional accuracy can be considerably efficiently manufactured.

When the partial welding lamination method of conductive material powder layer is used to model the heating coil, while the output and the wavelength of the fiber laser are not specifically limited, the adjustment of the output within a range of 400 to 1, 000 W and the adjustment of the wavelength within a range of 1,000 to 1,100 nm are preferable because the efficient modeling in a short time can be performed. When copper (pure copper) is used as the conductive material, to improve the laser absorbance of copper powder for enhancing the production efficiency of the heating coil, an absorbent containing a mixed powder of graphite and an inorganic oxide or the like can be added to the copper powder.

The heating coil according to the present invention needs to include a pair of plate-shaped grounding portions for contact with an electrode through which a high-frequency current is flowed, a pair of plate-shaped supporting portions disposed to be perpendicular to the respective grounding portions, and an annular heating unit disposed to connect distal ends of the supporting portions to one another. While the heating unit needs to be formed in an annular shape, the heating unit is not limited to an annular one, and may be one in a non-circular shape (for example, rectangular shape in plan view). Meanwhile, while the supporting portions are not specifically limited in shape insofar as they are a pair of plate-shaped (or rod-shaped) ones disposed to be perpendicular to the respective grounding portions, those with chamfered corner portions are preferable for avoiding a discharge phenomenon when an electric power is applied.

The heating coil according to the present invention needs to include a sequence of cooling medium flow-down path formed to flow down a medium for cooling inside each of the grounding portions, each of the supporting portions and the heating unit. The cooling medium flow-down path may be a single path disposed to internally connect the left and right grounding portions, the left and right supporting portions, and the heating unit, or may be two paths disposed to internally connect the grounding portions, the supporting portions, and the heating unit in the respective left and right sides of the heating coil. In addition, the cooling medium flow-down path formed without a seam or a level difference of a predetermined height or more (1.0 mm or more) at the inner wall, or formed with a bent portion and a joining portion in smooth curved shape (curved shape having a curvature radius of 5 mm or more) is preferable because the flow down aspect of the cooling medium becomes considerably smooth, and the cooling efficiency of the grounding portion and the supporting portion of the heating coil becomes extremely satisfactory.

### Example

### [Example 1]

### <Structure of Heating Coil>

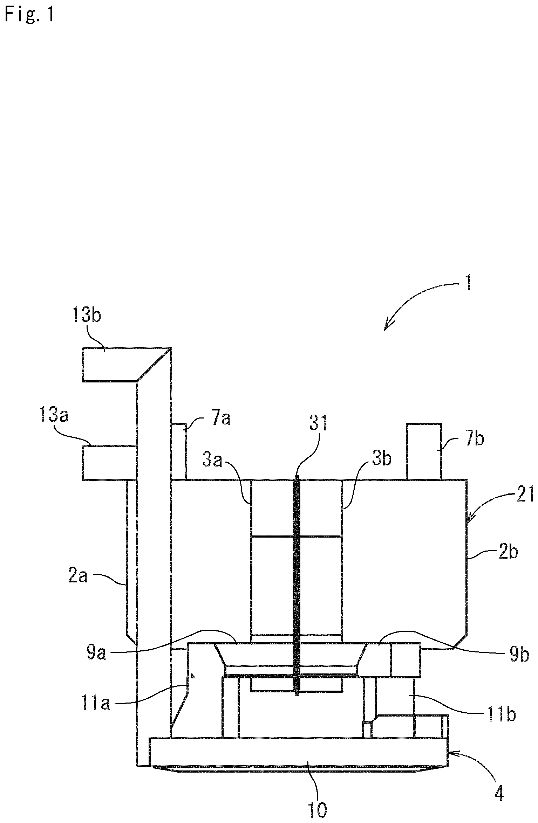

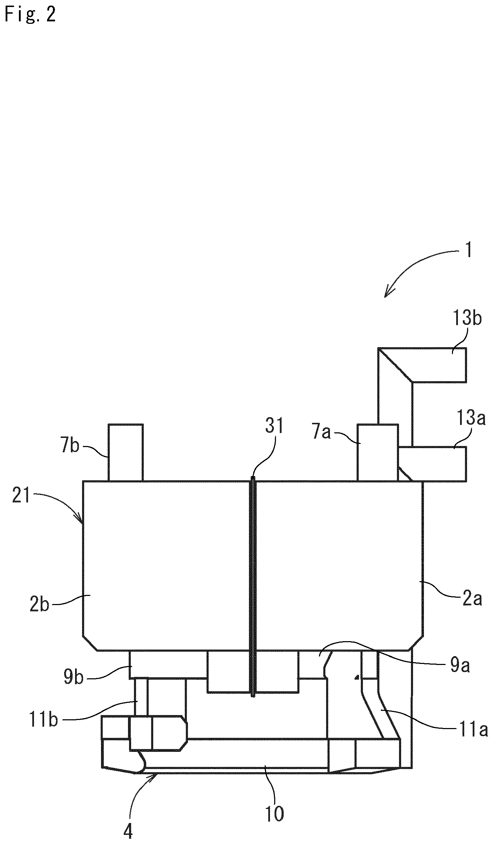

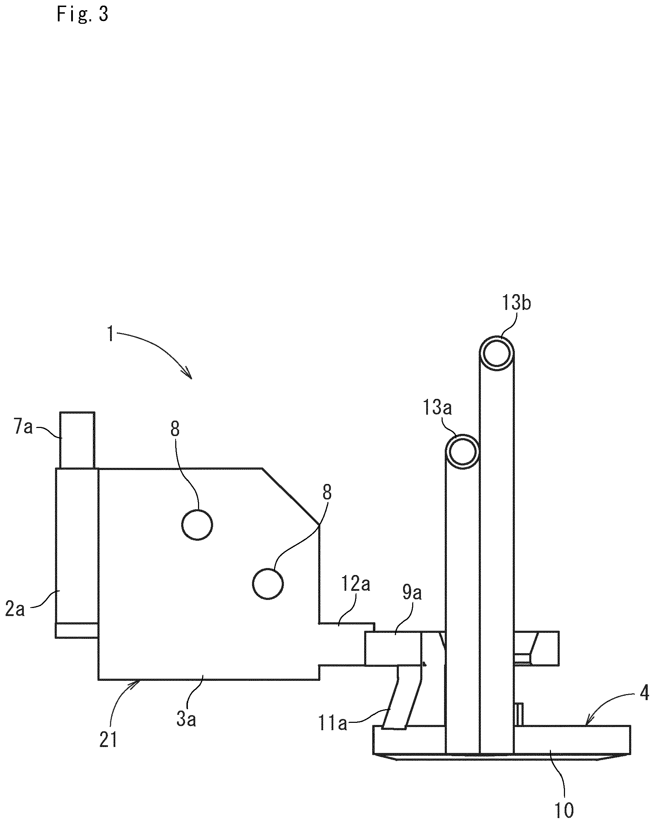

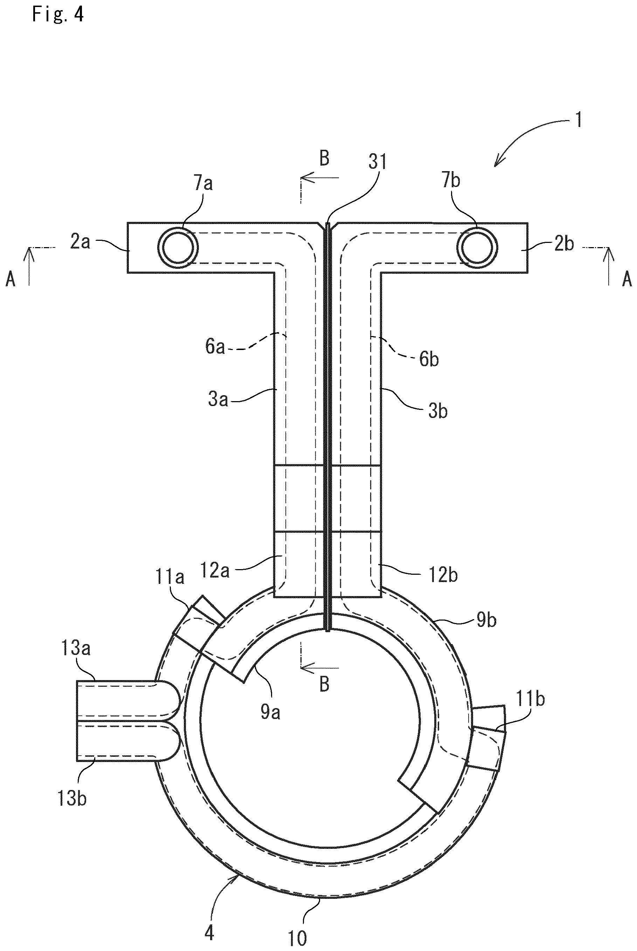

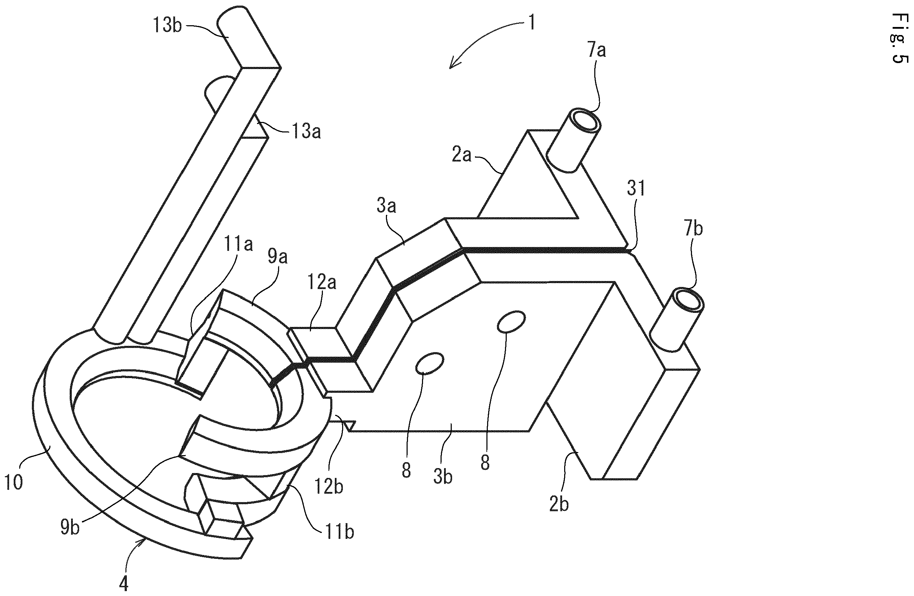

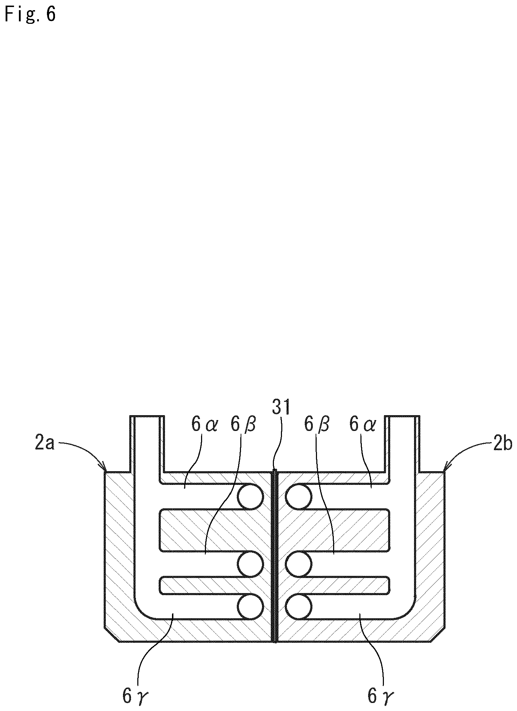

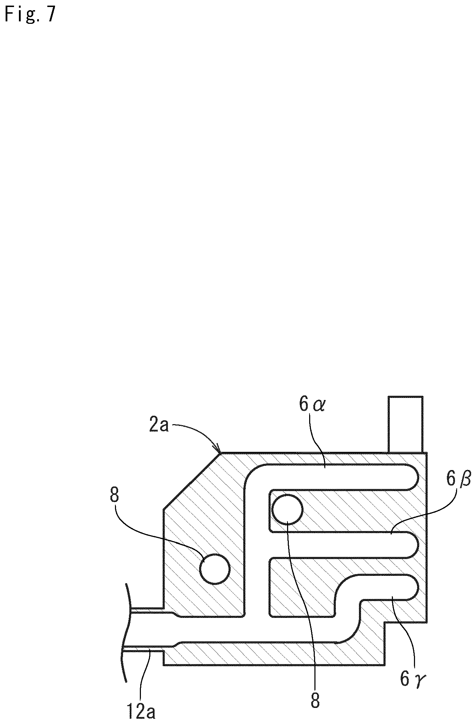

The following describes one embodiment of the heating coil according to the present invention in detail with reference to the drawings. Fig. 1 to Fig. 7 illustrate the heating coil, and a heating coil 1 includes a coil body 21 integrally formed of copper (high copper alloy, C18150), a sheet-shaped insulating plate 31 formed of a synthetic resin (fluororesin) having insulating property and heat resistance, and a screw member (not illustrated). Then, the heating coil 1 has a size of longitudinal length (front-rear) × lateral length (width) × height = 300 mm × 225 mm × 200 mm (lengths of the largest portions in longitudinal side, lateral side, and height).

The coil body 21 is formed by a modeling method using a three-dimensional printer described later, and includes grounding portions 2a, 2b for contact with an electrode of a high-frequency power source, a heating unit 4 configured to heat a material to be worked (workpiece) by induction heating, and supporting portions 3a, 3b configured to support the heating unit 4 at positions apart from the grounding portions 2a, 2b, respectively. Since the coil body 21 is formed by the modeling method using a three-dimensional printer, the whole coil body 21 has the same color, and the whole surface has the same roughness (surface roughness).

The grounding portions 2a, 2b are formed in a pair of left and right flat rectangular parallelepiped shapes (plate shapes), and disposed to be adjacent left and right at an interval of a predetermined distance (about 2 mm) having one side surfaces facing to one another. On the upper surfaces of the grounding portions 2a, 2b, cylindrical water discharge pipes 7a, 7b are disposed to project upward, respectively.

The supporting portions 3a, 3b are formed in a pair of left and right flat rectangular parallelepiped shapes (plate shapes), and disposed to be adjacent left and right at an interval of a predetermined distance (about 2 mm) having one plate surfaces facing to one another. Then, the base end edge portions of the supporting portions 3a, 3b are continuous with the proximities of inner end edges of the left and right grounding portions 2a, 2b, respectively, and the plate surfaces of the supporting portions 3a, 3b are perpendicular to the plate surfaces of the grounding portions 2a, 2b, respectively.

On the other hand, the heating unit 4 is configured to heat an inserted material to be worked (workpiece), and has a shape in which upper arc-shaped bodies 9a, 9b disposed in the upper side and a lower arc-shaped body 10 disposed in the lower side are connected by vertical connection bodies 11a, 11b, respectively. Then, the upper arc-shaped bodies 9a, 9b and the lower arc-shaped body 10 have a ring shape (annular shape) in plan view. The upper arc-shaped bodies 9a, 9b are disposed to be adjacent left and right at an interval of a predetermined distance (about 2 mm) having inner plate surfaces facing to one another, and form one circular arc. Then, the upper arc-shaped bodies 9a, 9b are coupled to distal ends of the left and right supporting portions 3a, 3b via tubular coupling bodies 12a, 12b, respectively.

Both of the upper arc-shaped bodies 9a, 9b and the lower arc-shaped body 10 have a vertical cross-sectional shape perpendicular to the longitudinal direction in a (chamfered rectangular shape having round corners). Then, near the left end edge on the upper surface of the lower arc-shaped body 10, an inner injection pipe 13a and an outer injection pipe 13b for injecting the cooling medium from outside are disposed to extend upward along the vertical direction.

Then, the heating coil 1 includes two left and right sequences of cooling medium flow-down paths 6a, 6b for flowing down the medium (water) for cooling inside the grounding portions 2a, 2b, the supporting portions 3a, 3b, and the heating unit 4. That is, the cooling medium flow-down path 6a in the left side reaches the left side water discharge pipe 7a from the inner injection pipe 13a passing through inside the lower arc-shaped body 10 (inside in the upper side with respect to the inner injection pipe 13a), the left side connection body 11a, inside the left side upper arc-shaped body 9a, inside the left side supporting portion 3a and the left side grounding portion 2a.

On the other hand, the cooling medium flow-down path 6b in the right side reaches the right side water discharge pipe 7b from the outer injection pipe 13b passing through inside the lower arc-shaped body 10 (inside in the lower side with respect to the outer injection pipe 13b), the right side connection body 11b, inside the right side upper arc-shaped body 9b, inside the right side supporting portion 3b and the right side grounding portion 2b. The left side cooling medium flow-down path 6a and the right side cooling medium flow-down path 6b are each branched into three paths (6α, 6β, 6γ) in the supporting portions 3a, 3b once, and the three paths (6α, 6β, 6γ) are separately introduced to the inside of the left and right grounding portions 2a, 2b, then combined into one path in the grounding portions 2a, 2b.

Since the heating coil 1 is integrally formed by the three-dimensional printer, in both of the cooling medium flow-down path 6a in the left side and the cooling medium flow-down path 6b in the right side, the bent portions and the joining portions are all formed in the smooth curved shape (curved shape having a curvature radius of 5 mm or more), and there is no steeply bent shape. In addition, both the cooling medium flow-down path 6a in the left side and the cooling medium flow-down path 6b in the right side have no seam or level difference of a predetermined height (1.0 mm) or more at the inner wall.

Furthermore, the sheet-shaped insulating plate 31 having a predetermined thickness (about 2.0 mm) is interposed between the left and right grounding portions 2a and 2b and between the left and right supporting portions 3a and 3b of the coil body 21, between the left and right upper arc-shaped bodies 9a and 9b of the heating unit 4, and between the left and right coupling bodies 12a and 12b, and in this state, the left and right supporting portions 3a, 3b and the insulating plate 31 are screwed together by bolts (not illustrated) inserted through screw-holes 8, 8. These bolts screw the supporting portions 3a, 3b and the insulating plate 31 together via bushes (not illustrated) made of a synthetic resin (glass epoxy resin) having insulating property and heat resistance, and are configured to avoid conduction between the supporting portions 3a and 3b via the bolts.

### <Manufacturing Method of Heating Coil>

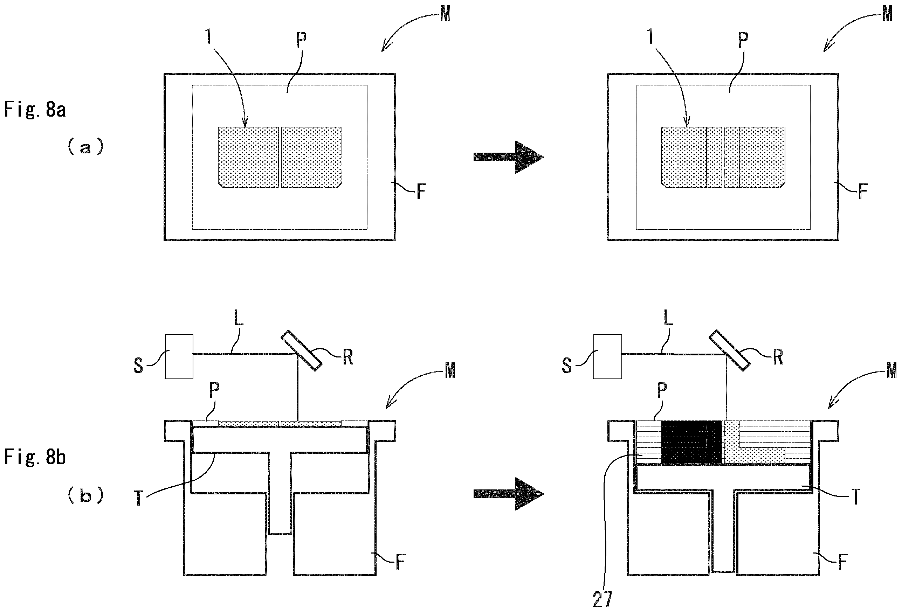

Fig. 8 illustrates a state of forming the heating coil 1, and a three-dimensional printer device M for forming the heating coil 1 includes a frame F provided with a rectangular parallelepiped recessed portion in the center, an elevating member disposed to be movable up and down with respect to the frame F, irradiation means S configured to emit a laser L, reflection means R configured to reflect the laser, and driving means (not illustrated) configured to move up and down the elevating member. Then, the elevating member is provided with a table T having approximately the same area as an opening portion of the recessed portion of the frame F.

In the manufacture of the heating coil 1 by the three-dimensional printer device M, first, a powder of copper alloy (C18150 containing 99.3 mass% of Cu, 0.6 mass% of Cr, and 0.10 mass% of Zr) is laid with a predetermined thickness (for example, 30 µm) on the surface of the table T of the elevating member at an elevated position (the copper powder is laid by an amount of a gap between the surface of the table T and a surface of an outer frame of the frame F). Then, the copper alloy powder is irradiated with the laser (fiber laser) L of a predetermined output in a predetermined shape to melt a part of the copper alloy powder, which is cooled and solidified, thereby forming a part of the heating coil 1.

After the formation of a part of the heating coil 1 as described above, the table T of the elevating member is moved down by a predetermined height (for example, 30 µm) by the driving means. Then, at the height position, the operation of "laying the copper alloy powder → irradiating the copper alloy powder with the laser L → cooling and solidifying the melted copper alloy (solidification by coagulation) at the upper side of the part of the previously formed heating coil 1" is repeated. Then, as described above, the operation of "moving down the table T of the elevating member → laying the copper alloy powder → irradiating the copper alloy powder with the laser L → cooling and solidifying the melted copper alloy" is repeated by a predetermined number of times (for example, 5,000 times), thereby allowing integrally forming the heating coil 1 made of a copper alloy.

### <Use Method of Heating Coil>

The heating coil 1 configured as described above can heat a material to be worked by, in a state where the left and right grounding portions 2a, 2b are grounded to the electrode, and a material to be worked (workpiece) is inserted inside the annular portion (that is, the ring formed by the upper arc-shaped bodies 9a, 9b and the lower arc-shaped body 10) of the heating unit 4, turning on an external power source (high-frequency power source) via the electrode and using an electromagnetic induction phenomenon. Additionally, by injecting a cooling medium (water) into the left side cooling medium flow-down path 6a from the inner injection pipe 13a and discharging from the water discharge pipe 7a, and injecting the cooling medium into the right side cooling medium flow-down path 6b from the outer injection pipe 13b and discharging from the water discharge pipe 7b, the grounding portions 2a, 2b and the supporting portions 3a, 3b are efficiently cooled together with the heating unit 4, thereby allowing avoiding a situation, such as a damage due to the melted insulating plate 31.

### <Effect of Heating Coil>

As described above, the heating coil 1 is provided with the sequences of cooling medium flow-down paths 6a, 6b for flowing down the cooling medium not only inside the heating unit 4 but also inside the respective grounding portions 2a, 2b and the respective supporting portions 3a, 3b. Therefore, not only the heating unit 4 but also the respective grounding portions 2a, 2b and the respective supporting portions 3a, 3b are simultaneously cooled during the heating process of the material to be worked, and a situation of being kept at high temperature over a long period of time does not occur. Therefore, since the situation, such as a dielectric breakdown caused by carbonization and/or deterioration of the insulating plate 31 and a damage due to stress concentration to a specific part, does not occur, the heating coil 1 is excellent in durability, and can undergo the repeated heating process on the material to be worked over a long period of time even under the high output condition.

The heating coil 1 is formed by the modeling method using the three-dimensional printer device M (that is, the partial welding lamination method of conductive material powder layer based on three-dimensional data), and does not include a bonding portion by silver solder or the like as a conventional heating coil. Therefore, the deformation due to the continuous use does not occur, and the standard hardening process can be performed over a long period of time. Furthermore, since the heating coil 1 is formed by the modeling method using the three-dimensional printer device M, the product having the same shape and the same characteristics can be efficiently manufactured with good reproducibility without depending on the skill of the manufacturing worker. In addition, the heating coil 1 is provided with the sequences of the cooling medium flow-down paths 6a, 6b inside the heating unit 4, the respective grounding portions 2a, 2b, and the respective supporting portions 3a, 3b by the modeling method using the three-dimensional printer device M without brazing. Therefore, the need for providing a plurality of cooling water supply mechanisms is eliminated, and the loss of cooling water can be reduced.

Furthermore, the heating coil 1 includes the discharge ports 7a, 7b for discharging the cooling medium from the cooling medium flow-down paths 6a, 6b at the grounding portions 2a, 2b. Therefore, the mounting portion of the heating coil in the high-frequency heater can be compactly designed with a small space, and the installation to and removal from the high-frequency heater main body is facilitated.

The heating coil 1 includes the injection ports 13a, 13b for injecting the cooling medium into the cooling medium flow-down paths 6a, 6b at the heating unit 4, and the heating unit 4 likely to become the highest temperature can be supplied with the cooling medium at low temperature immediately after introduction from the water source. Therefore, the heating coil 1 is extremely excellent in cooling efficiency, and can be used in a state of being applied with a high-frequency power supply at a considerably high output.

### <Durability Evaluation>

The 10 heating coils 1 described above were manufactured, and for evaluating the durability, a shot (heating process on a material to be worked by energization with a high-frequency power supply) was repeated 100,000 times under a usage condition of 60 kVA × 10 seconds while performing cooling using the cooling medium flow-down paths 6a, 6b (cooling water flow rate = 80 L/min.). The dielectric breakdown due to the carbonization and/or the deterioration of the insulating plate 31 did not occur in all of the heating coils. In the measurement of the surface temperatures of the supporting portions 3a, 3b of the heating coil 1 during the heating process of the material to be worked under the above-described usage condition, the large temperature rise from the temperature before starting the shot (about 30 °C) was not seen. Table 1 illustrates the measurement result of the surface temperature.

### [Comparative Example 1]

A heating coil 1' of Comparative Example 1 was manufactured with the raw material similar to Example 1 by the modeling method using the three-dimensional printer device M similar to Example 1. The heating coil 1' had a shape in which the outer shape was the same as the heating coil of Example 1 but the cooling medium flow-down path was not formed inside the grounding portion or the supporting portion (the inner injection pipe 13a and the outer injection pipe 13b were communicated with one another inside the heating unit 4, and a cooling medium flow-down path having a route of "the inner injection pipe 13a → the heating unit 4 → the outer injection pipe 13b" was formed). Then, with the heating coil 1' of Comparative Example 1, the shot was repeated for about 30 minutes under the usage condition of 60 kVA × 10 seconds while cooling only the heating unit 4 (cooling water flow rate = 80 L/min.), and then, the surface temperatures of the supporting portions 3a, 3b of the heating coil 1' were measured. As a result, it was seen that the temperature significantly increased from the temperature before starting the shot. Table 1 illustrates the measurement result of the surface temperature.

**[Table 1]**

| | Cooling Medium Flow-Down Path in Grounding Portion and Supporting Portion | Surface Temperature of Supporting Portion after Heating Process (°C) |
|---|---|---|
| Example 1 | Provided | 37 |
| Comparative Example 1 | Not Provided | 110 |

### <Modification of Heating Coil>

The heating coil according to the present invention is not limited to the above-described aspect of the embodiment, and the configuration, such as a material, and shapes and structures of the grounding portion, the supporting portion, and the heating unit, can be appropriately changed as necessary without departing from the gist of the present invention.

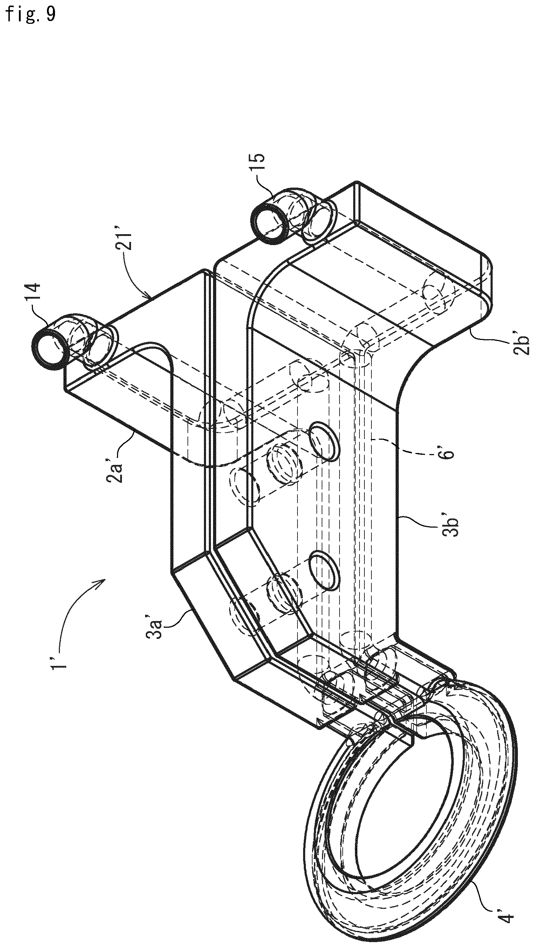

For example, the heating coil of the present invention is not limited to one including the annular heating unit configured of the upper arc-shaped body and the lower arc-shaped body as the above-described embodiment, and may be, for example, one including a simple circular heating unit as illustrated in Fig. 9. The shapes of the heating unit, the grounding portion, and the supporting portion may be any shapes based on, for example, the purpose of fitting to the shape of the material to be worked. The heating coil according to the present invention is not limited to one including a plurality of cooling medium flow-down paths as the above-described embodiment, and may be changed to, for example, one including a single cooling medium flow-down path (for example, as the heating coil 1 of Fig. 9, one reaching the heating unit 4 from an injection pipe 14 in one side via a grounding portion 2a' and a supporting portion 3a' and reaching an injection pipe 15 in the opposite side from the heating unit 4 via a supporting portion 3b' and a grounding portion 2b').

In addition, the heating coil according to the present invention is not limited to one in which the insulating plate made of a fluororesin (PTFE, PFA, FEP, ETFE, PCTFE, ECTFE, PVDF) insulates between a pair of grounding portions and between a pair of supporting portions as the above-described embodiment, and may be changed to, for example, one in which the insulating plate made of another synthetic resin having insulation property and heat resistance, such as polyacetal (POM), polyphenylene sulfide (PPS), and polyetheretherketone (PEEK), insulates between the pair of grounding portions and between the pair of supporting portions.

### INDUSTRIAL APPLICABILITY

The heating coil according to the present invention provides the excellent effects as described above, and therefore, can be appropriately used as a member for heating a material to be worked using electromagnetic induction.

### DESCRIPTION OF REFERENCE SIGNS

1, 1'.. Heating coil
2a, 2b, 2a', 2b' .. Grounding portion
3a, 3b, 3a', 3b' .. Supporting portion
4, 4' .. Heating unit
6a, 6b, 6' . . Cooling medium flow-down path
7a, 7b .. Discharge pipe
13a.. Inner injection pipe
13b .. Outer injection pipe
14 .. Injection pipe
15 .. Discharge pipe

## Claims

1. A heating coil used for a high-frequency heater configured to heat a material to be worked using electromagnetic induction by a high-frequency current, wherein
the heating coil is integrally formed by a modeling method repeating laying, melting, solidifying, and laminating of a powder containing a conductive material based on three-dimensional data, or a modeling method laminating a melted conductive material based on three-dimensional data, and
the heating coil comprises:
a pair of plate-shaped grounding portions for contact with an electrode through which a high-frequency current is flowed;
a pair of plate-shaped supporting portions disposed to be perpendicular to the respective grounding portions; and
an annular heating unit disposed to connect distal ends of the supporting portions to one another, wherein
a sequence of a cooling medium flow-down path for flowing down a cooling medium is formed inside each of the grounding portions, each of the supporting portions, and the heating unit.

2. The heating coil for a high-frequency heater according to claim 1, wherein
the grounding portion is provided with an injection port for injecting the cooling medium into the cooling medium flow-down path and/or a discharge port for discharging the cooling medium from the cooling medium flow-down path.

3. The heating coil for a high-frequency heater according to claim 1, wherein
the heating unit is provided with an injection port for injecting the cooling medium into the cooling medium flow-down path and/or a discharge port for discharging the cooling medium from the cooling medium flow-down path.
